# DEMANDE DE BREVET EUROPEEN

(11) **EP 2 273 086 A1**
(43) Date de publication de la demande: **12.01.2011**
(21) Numéro de dépôt: 10290297.0
(22) Date de dépôt: 04.06.2010
(51) Int. Cl.: F02B 29/06, F02B 25/24, F02B 25/00

(54) **Procédé de contrôle de l'admission d'un moteur à combustion interne suralimenté comportant une opération de balayage des gaz brûlés**

(30) Priorité: 12.06.2009 FR 0902848
(71) Demandeur: IFP Energies Nouvelles, 92852 Rueil-Malmaison Cedex (FR)
(72) Inventeur: Gautrot, Xavier, 92500 Rueil-Malmaison (FR)

(57) **Abrégé**

La présente invention concerne un procédé de contrôle de l'admission d'un moteur suralimenté comportant un cylindre (10) avec au moins deux tubulures d'admission (12, 14) associées à leurs soupapes d'admission (16,18) et reliées à un répartiteur d'admission (30), et au moins une tubulure d'échappement (20) avec sa soupape d'échappement (22), procédé selon lequel, avant la fin de la phase d'échappement dudit moteur, une opération de balayage de gaz d'échappement est réalisée par croisement de soupapes d'échappement (22) et d'admission (16) et, à la fin de l'opération de balayage, une étape d'élaboration d'un mélange carburé est effectuée pour la combustion de ce mélange dans ledit cylindre.

Selon l'invention, le procédé consiste à introduire de l'air suralimenté provenant d'une première zone (38) du répartiteur d'admission pour effectuer l'opération de balayage ; à utiliser de l'air suralimenté venant d'une deuxième zone (40) du répartiteur pour réaliser un mélangé carburé pour le cylindre ; après la fin de la phase d'admission, à refouler, dans cette deuxième zone (40), une partie du mélange carburé contenu dans le cylindre.

## Description

La présente invention se rapporte à un procédé de contrôle de l'admission d'un moteur à combustion interne suralimenté comportant une opération de balayage des gaz brûlés.

Comme cela est largement connu, il est habituel d'utiliser, pour un tel type de moteur, un air d'admission qui est comprimé, généralement dénommé air de suralimentation, pour alimenter ses cylindres. Ceci permet d'augmenter la puissance de ce moteur qui est intrinsèquement dépendante de la quantité d'air admise dans la chambre de combustion de ces cylindres.

Il est également connu d'augmenter encore plus la puissance de ce type de moteur en réalisant une opération dénommée balayage de gaz brûlés. Cela consiste à évacuer, au début de la phase d'admission de ce moteur, les gaz d'échappement résiduels contenus dans la chambre de combustion en fin de phase d'échappement pour les remplacer par de l'air suralimenté. Cette opération se réalise généralement par un croisement des soupapes d'échappement et d'admission.

Pendant cette opération de balayage, se pose le problème du transfert de l'air suralimenté carburé directement à l'échappement lors du croisement de ces soupapes. En effet, lors de ce transfert, une partie de l'air suralimenté carburé est évacuée par l'échappement du moteur pour être rejetée dans l'atmosphère. Ce rejet introduit des hydrocarbures imbrûlés dans l'air ambiant qui sont des polluants nocifs à l'environnement et à l'être humain.

Pour éviter un tel problème, le dispositif décrit dans la demande de brevet français N° 2 841 294 du demandeur prévoit de réaliser l'opération de balayage de gaz brûlés grâce à l'ajout et à l'utilisation d'une tubulure d'admission supplémentaire avec sa soupape, spécifiquement pour admettre de l'air suralimenté non carburé.

Ce type de dispositif se compose donc d'une tubulure d'admission spécifique (avec sa soupape) pour l'introduction de l'air suralimenté non carburé utilisé lors de l'opération de balayage dans la chambre de combustion et d'une autre tubulure d'admission avec également sa soupape pour y admettre de l'air suralimenté carburé à la fermeture de la tubulure d'admission spécifique.

Ainsi, l'opération de balayage des gaz brûlés est effectuée par un croisement de la soupape d'échappement et de la soupape d'admission d'air suralimenté non carburé du cylindre considéré. Lors de ce croisement, l'air suralimenté non carburé admis dans la chambre de combustion remplace les gaz brûlés résiduels qui sont évacués au travers de la soupape d'échappement vers le collecteur d'échappement puis dans la ligne d'échappement.

Une fois cette opération de balayage terminée, l'autre tubulure d'amission sert à réaliser un mélange carburé dans la chambre de combustion.

Ceci pose également un problème non négligeable car les entrées des tubulures d'admission d'air suralimenté carburé et d'air suralimenté non carburé sont généralement connectées à un même répartiteur d'admission.

Par cela, il se produit au sein de ce répartiteur un mélange entre l'air suralimenté carburé provenant des tubulures d'air suralimenté carburé et l'air non carburé issu des tubulures d'admission d'air suralimenté non carburé. Par conséquent, lors de l'opération de balayage de gaz brûlés, de l'air suralimenté partiellement carburé est introduit dans la chambre de combustion pour ensuite être évacué au travers de la soupape d'échappement avec les gaz brûlés.

Ceci entraîne également une émission d'hydrocarbures imbrûlés à l'échappement ainsi qu'une surconsommation de carburant.

De plus, il peut être souhaité de pouvoir modifier le rendement du moteur, notamment par le changement du taux de compression. Pour cela, il est prévu de maintenir une des deux soupapes d'admission en position d'ouverture, généralement la soupape d'air carburé, au début de la phase de compression du moteur et ce pendant quelques degrés d'angle de vilebrequin.

Par cela, le mélange carburé présent dans la chambre de combustion n'est pas comprimé au début de la phase de compression du moteur et le taux de compression peut être modifié en dépendance du moment de fermeture de cette soupape d'admission. Cependant, de l'air carburé est introduit dans la tubulure d'amission et le problème précédemment mentionné subsiste avec la possibilité de mélange avec l'air non carburé utilisé pour le balayage.

La présente invention se propose donc de remédier aux inconvénients précités grâce à un procédé de contrôle de l'admission d'un moteur à combustion interne suralimenté qui permette de réaliser l'opération de balayage de gaz brûlés dans des conditions minimisant le rejet d'hydrocarbures imbrûlés et cela aussi bien pour un moteur à injection directe qu'à injection indirecte tout en conservant les performances du moteur.

A cet effet, la présente invention concerne un procédé de contrôle de l'admission d'un moteur à combustion interne suralimenté comportant au moins un cylindre avec au moins deux tubulures d'admission associées à leurs soupapes d'admission et reliées à un répartiteur d'admission, et au moins une tubulure d'échappement avec sa soupape d'échappement, procédé selon lequel, avant la fin de la phase d'échappement dudit moteur, une opération de balayage de gaz d'échappement résiduels du cylindre est réalisée par croisement de soupapes d'échappement et d'admission et, à la fin de l'opération de balayage, une étape d'élaboration d'un mélange carburé est effectuée pour sa combustion dans ledit cylindre, **caractérisé en ce qu**'il consiste :
- à introduire de l'air suralimenté provenant d'une première zone du répartiteur d'admission pour effectuer l'opération de balayage de gaz d'échappement résiduels,
- à utiliser de l'air suralimenté venant d'une deuxième zone du répartiteur d'admission pour réaliser un mélangé carburé pour le cylindre,
- après la fin de la phase d'admission, à refouler, dans cette deuxième zone dudit répartiteur, une partie du mélange carburé contenu dans le cylindre.

Le procédé peut consister à introduire ladite partie du mélange carburé dans la deuxième zone par ouverture de la soupape d'admission contrôlant la tubulure d'admission reliée à cette deuxième zone.

Le procédé peut consister à utiliser l'air suralimenté venant de la deuxième zone du répartiteur d'admission après le début de la phase d'admission du moteur.

Le procédé peut consister à introduire de l'air suralimenté provenant de la première zone du répartiteur d'admission après l'opération de balayage de gaz d'échappement résiduels.

Le procédé peut consister à alimenter en air suralimenté successivement la première zone puis la deuxième zone du répartiteur d'admission.

Le procédé peut consister à disposer de deux zones du répartiteur d'admission qui soient physiquement distinctes l'une de l'autre.

Les autres caractéristiques et avantages de l'invention vont apparaître à la lecture de la description qui va suivre, donnée à titre uniquement illustratif et non limitatif, et à laquelle sont annexées :
- la figure 1 qui montre une vue schématique d'un moteur à combustion interne utilisant le procédé selon l'invention;
- la figure 2 qui montre une vue en coupe selon la ligne AA du moteur de la figure 1 et
- la figure 3 qui illustre les ouvertures des différentes soupapes en fonction de la position du piston du moteur utilisant le procédé selon l'invention.

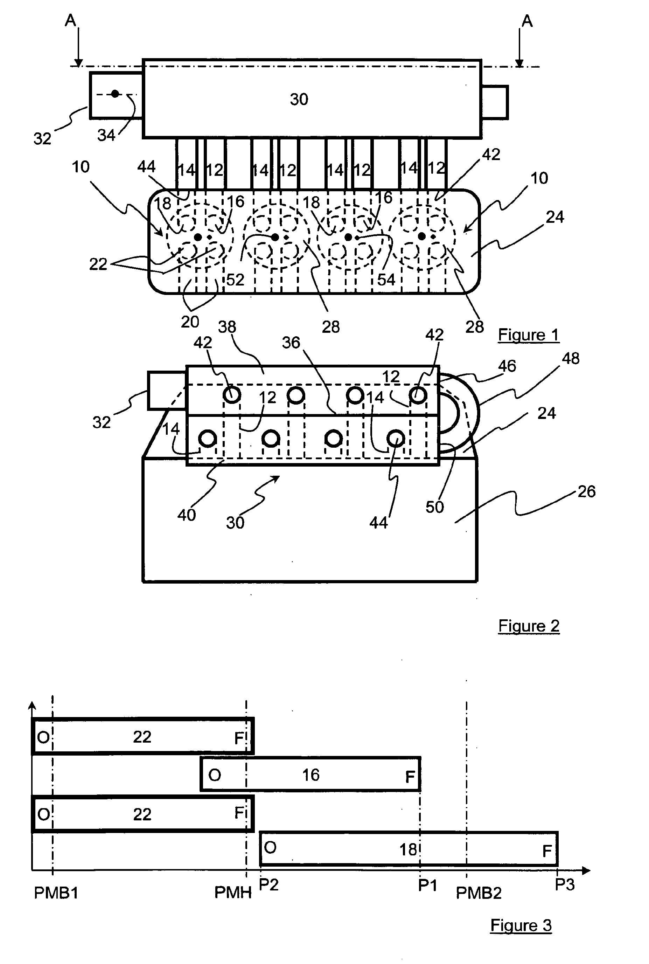

L'exemple illustré à la figure 1 montre un moteur à combustion interne suralimenté à injection directe, notamment d'essence, et préférentiellement à allumage commandé. Cet exemple n'est pas limitatif et l'invention décrite ci-après peut également s'appliquer à un moteur à combustion interne suralimenté à injection indirecte.

Ce moteur comprend au moins un cylindre 10, ici quatre cylindres, avec chacun deux types de tubulures d'admission d'air suralimenté 12 et 14 associées chacune à une soupape d'admission 16 et 18.

Par air suralimenté, il est entendu soit de l'air suralimenté seul, soit de l'air suralimenté additionné de gaz d'échappement recirculé (EGR).

La tubulure d'admission 12 permet d'admettre de l'air suralimenté non carburé dans la chambre de combustion et la tubulure d'admission 14 y autorise la réalisation d'un air suralimenté carburé.

Pour des raisons de simplification de la description, cette tubulure d'admission 12 et sa soupape seront dénommées respectivement tubulure de balayage et soupape de balayage. Pour les mêmes raisons, la tubulure 14 et sa soupape 18 seront baptisées tubulures de carburation et soupape de carburation.

Ce cylindre comprend également au moins une tubulure d'échappement 20, ici deux, chacune avec sa soupape d'échappement 22.

Les tubulures d'admission et d'échappement ainsi que leurs soupapes sont portées au moins en partie par une culasse 24 fixée sur le bloc moteur 26 qui comporte les cylindres. Cette culasse permet de délimiter, avec la partie haute d'un piston (non représenté) qui coulisse dans le cylindre et la paroi du cylindre, la chambre de combustion 28 du cylindre concerné.

Les tubulures d'admission 12 et 14 de chaque cylindre 10 sont raccordées séparément chacune à un répartiteur d'admission 30. Ce répartiteur est relié par une entrée 32 à la sortie d'un moyen de compression d'air (non représenté), tel qu'un turbocompresseur. L'entrée 32 est avantageusement pourvue d'un moyen de vannage 34, par exemple une vanne de type papillon, qui autorise un réglage de la quantité d'air suralimenté introduite dans ce répartiteur.

Comme illustré sur la figure 2, le répartiteur d'admission 30 comprend une partition interne 36 permettant de le séparer en deux zones indépendantes 38 et 40 distinctes l'une de l'autre. Avantageusement, cette partition est réalisée par une cloison étanche s'étendant horizontalement dans la plus grande longueur du répartiteur en le divisant en deux parties étanches entre elles et de volumes sensiblement égaux. Ces deux zones permettent ainsi de délimiter deux demi répartiteurs comme mieux explicités ci-après.

Le premier demi répartiteur 38, dénommé répartiteur de balayage, est situé sur la partie haute du répartiteur 30 (en considérant la figure 2) et comprend l'entrée d'air suralimenté 32 avec son moyen de vannage 34 et permet d'alimenter par des orifices 42, dit orifices de balayage, chaque tubulure de balayage 12 associée à sa soupape 16.

Le deuxième demi répartiteur 40, dit répartiteur de carburation, qui est situé sous le répartiteur de balayage, comprend des orifices 44, appelés orifices de carburation, permettant de mettre en communication les tubulures de carburation 14 et leurs soupapes 18 avec l'intérieur de ce répartiteur de carburation. Le répartiteur de balayage 38 comprend également une sortie d'air suralimenté 46 qui permet d'alimenter en air suralimenté, par un conduit 48, une entrée d'air 50 prévue dans le répartiteur de carburation.

Ainsi, pendant toute la durée de fonctionnement du moteur, de l'air suralimenté pénètre par l'entrée 32 dans le répartiteur de balayage 38 en alimentant les tubulures 12 par les orifices 42 puis alimente, par le conduit 48, les orifices 44 du répartiteur de carburation 40 pour les tubulures 14.

Grâce à cela, la circulation de l'air est en série du répartiteur de balayage 38 vers le répartiteur de carburation 40 sans qu'il y ait la possibilité de mélange de l'air entre les deux répartiteurs. En effet, les orifices de balayage 42 et de carburation 44 sont physiquement séparés les uns des autres par la cloison 36 et il ne peut y voir de communication entre eux.

Dans l'exemple décrit, les cylindres 10 comportent également un moyen d'injection de carburant, comme un injecteur multi jets 52, qui permet d'introduire du carburant dans les chambres de combustion 28 pour qu'il se mélange avec le fluide qui y est contenu.

Egalement, ces cylindres portent un moyen d'allumage du mélange carburé, comme un bougie d'allumage à étincelle 54.

Bien entendu, sans que cela soit explicitement illustré sur les figures, les soupapes d'admission 16, 18 sont commandées en ouverture et en fermeture par tous moyens d'actionnement qui permettent de faire varier leurs lois de levées, en particulier au niveau de leurs étalements et/ou de leurs moments d'ouverture/fermeture, et ce indépendamment les unes des autres. Ces moyens sont mieux connus sous le sigle VVT (Variable Valve Timing) ou VVL (Variable Valve Lift). Avantageusement, il sera utilisé des moyens d'actionnement des soupapes de type VVL avec deux cames. Pour les soupapes d'échappement, il est avantageusement utilisé des moyens d'actionnement conventionnels comme un arbre à cames.

Comme cela est largement connu, les injecteurs 52 ainsi que les bougies 54 sont classiquement contrôlés par le calculateur moteur (non représenté) que comporte habituellement tout moteur.

On se rapporte maintenant à la figure 3 qui illustre les différentes lois d'ouverture des soupapes d'admission 16, 18 et d'échappement 22 entre une position de d'ouverture (O) et de fermeture (F) de leurs tubulures respectives 12, 14, 20 et cela en fonction de la position du piston.

Pendant la phase d'échappement du moteur et au voisinage du point mort bas échappement du piston (PMB1), les soupapes d'échappement 22 s'ouvrent (position O) puis se referment (position F) au voisinage du point mort haut du piston (PMH). Durant cette course, la majorité des gaz d'échappement contenus dans la chambre de combustion est évacuée vers les tubulures d'échappement 20.

Avant que ces soupapes d'échappement ne se referment, l'opération de balayage des gaz d'échappement est entreprise. Pour cela, on réalise un croisement entre les soupapes d'échappement 22 et la soupape de balayage 16. Plus précisément, la soupape de balayage 16 s'ouvre avant le PMH et avant la fermeture des soupapes d'échappement 22. Par cela, l'air suralimenté non carburé présent dans le répartiteur de balayage 38 est introduit dans la chambre de combustion 28 au travers de l'orifice 42, de la tubulure de balayage 12 et de la soupape 16. Cet air suralimenté, qui est à une pression supérieure à celle des gaz brûlés présents dans cette chambre, balaye ces gaz résiduels pour les évacuer au travers de la soupape d'échappement 22 et cela jusqu'à ce qu'elle soit en position de fermeture (F). Ainsi de l'air suralimenté non carburé remplace les gaz d'échappement habituellement présents dans la chambre de combustion au voisinage de la fin de la phase d'échappement du moteur.

Les soupapes d'échappement 22 étant fermées après le PMH du piston, la soupape de balayage 16 poursuit sa course jusqu'à sa fermeture (F) à la position P1 du piston située avant son Point Mort Bas compression (PMB2) de manière à continuer d'admettre de l'air suralimenté.

Conjointement, la soupape de carburation 18 s'ouvre à la position P2 du piston après quelques degrés d'angle de vilebrequin après le PMH et continue sa course jusqu'à la position P3 du piston située après le PMB2. Bien entendu, cette ouverture peut également être réalisée au PMH sans pour cela sortir du cadre de l'invention.

Dans le cas d'une injection directe de carburant, il se réalise généralement un mélange carburé dans la chambre de combustion pendant la phase d'admission de ce moteur entre le PMH et le PMB2. Ce mélange résulte donc de l'adjonction de carburant par l'injecteur 52 à l'air suralimenté contenu dans la chambre de combustion.

Pour ce qui concerne un moteur à injection indirecte, l'injecteur est placé sur la tubulure de carburation 14 de façon à y réaliser un mélange carburé. Ce mélange carburé est ensuite introduit dans la chambre de combustion 28 où il se mélange avec l'air suralimenté présent dans la chambre pour y réaliser le mélange carburé final.

Dans les deux types de moteurs (injection directe ou injection directe), la chambre de combustion contient donc un mélange carburé prévu pour être brûlé lors de la phase de détente de ce moteur.

Compte tenu de la position d'ouverture de la soupape de carburation et de son moment de fermeture à la position P3 du piston, de l'air carburé est refoulé dans la tubulure de carburation 14 et dans le répartiteur de carburation 40, suivant en cela le principe du cycle dit de Miller. Ceci provient du fait que le piston a un mouvement ascendant à partir du PMB2 et pousse en conséquence le mélange carburé vers les soupapes.

Mais, comme ce répartiteur est physiquement séparé du répartiteur de balayage, il ne se produit aucun mélange entre l'air suralimenté carburé et non carburé contenus dans ces répartiteurs. De plus, il est possible de faire varier le moment de fermeture de la soupape de carburation à partir du PMH de façon à faire varier à volonté le taux de compression du moteur tout en évitant le mélange entre les deux airs suralimentés.

Par la suite, après la phase de compression et de détente du moteur, l'opération de balayage de gaz brûlés ne se réalise qu'avec de l'air suralimenté non carburé. De plus, après cette opération de balayage, l'ouverture de la soupape de carburation permet d'introduire, dans une première étape, de l'air carburé quasiment homogène, ce qui ne peut qu'améliorer l'homogénéité du mélange carburé obtenu en fin de phase d'admission du moteur.

La présente invention n'est pas limitée à l'exemple décrit ci-dessus mais englobe toutes variantes et tous équivalents.

Notamment, le répartiteur d'admission 30 avec ses répartiteurs de balayage et de carburation physiquement distincts l'un de l'autre peut avoir l'une des configurations décrites plus précisément dans la demande de brevet français N° 2 856 435 du demandeur.

## Revendications

1. Procédé de contrôle de l'admission d'un moteur à combustion interne suralimenté comportant au moins un cylindre (10) avec au moins deux tubulures d'admission (12, 14) associées à leurs soupapes d'admission (16,18) et reliées à un répartiteur d'admission (30), et au moins une tubulure d'échappement (20) avec sa soupape d'échappement (22), procédé selon lequel, avant la fin de la phase d'échappement dudit moteur, une opération de balayage de gaz d'échappement résiduels du cylindre est réalisée par croisement de soupapes d'échappement (22) et d'admission (16) et, à la fin de l'opération de balayage, une étape d'élaboration d'un mélange carburé est effectuée pour sa combustion dans ledit cylindre, **caractérisé en ce qu'**il consiste :
- à introduire de l'air suralimenté provenant d'une première zone (38) du répartiteur d'admission pour effectuer l'opération de balayage de gaz d'échappement résiduels,
- à utiliser de l'air suralimenté venant d'une deuxième zone (40) du répartiteur d'admission pour réaliser un mélange carburé pour le cylindre,
- après la fin de la phase d'admission, à refouler, dans cette deuxième zone (40) dudit répartiteur, une partie du mélange carburé contenu dans le cylindre.

2. Procédé de contrôle de l'admission d'un moteur selon la revendication 1, **caractérisé en ce qu'**il consiste à introduire ladite partie du mélange carburé dans la deuxième zone (40) par ouverture de la soupape d'admission (18) contrôlant la tubulure d'admission (16) reliée à cette deuxième zone.

3. Procédé de contrôle de l'admission d'un moteur selon la revendication 1 ou 2, **caractérisé en ce qu'**il consiste à utiliser l'air suralimenté venant de la deuxième zone (40) du répartiteur d'admission (30) après le début de la phase d'admission du moteur.

4. Procédé de contrôle de l'admission d'un moteur selon l'une des revendications précédentes; **caractérisé en ce qu'**il consiste à introduire l'air suralimenté provenant de la première zone (38) du répartiteur d'admission (30) après l'opération de balayage de gaz d'échappement résiduels.

5. Procédé de contrôle de l'admission d'un moteur selon l'une des revendications précédentes, **caractérisé en ce qu'**il consiste à alimenter en air suralimenté successivement la première zone (38) puis la deuxième zone (40) du répartiteur d'admission (30).

6. Procédé de contrôle de l'admission d'un moteur selon l'une des revendications précédentes, **caractérisé en ce qu'**il consiste à disposer de deux zones (38, 40) du répartiteur d'admission (30) qui soient physiquement distinctes l'une de l'autre.
